# EUROPÄISCHE PATENTSCHRIFT

(11) **EP 3 054 058 B1**
(45) Veröffentlichungstag und Bekanntmachung des Hinweises auf die Patenterteilung: **04.04.2018**
(21) Anmeldenummer: 15003516.0
(22) Anmeldetag: 10.12.2015
(51) Int. Cl.: E03C 1/084, G05D 7/01, E03C 1/08

(54) **SANITÄRE EINSETZEINHEIT**
SANITARY INSERT UNIT
UNITE D'INSERTION SANITAIRE

(30) Priorität: 03.02.2015 DE 202015000855 U
(43) Veröffentlichungstag der Anmeldung: 10.08.2016
(73) Patentinhaber: Neoperl GmbH, 79379 Müllheim (DE)
(72) Erfinder: Stein, Alexander, 79241 Ihringen (DE)
(74) Vertreter: Börjes-Pestalozza, Henrich

(56) Entgegenhaltungen:
- EP-A1- 1 933 217
- EP-B1- 2 100 201

## Beschreibung

Die Erfindung betrifft eine sanitäre Einsetzeinheit, die am Wasserauslauf einer sanitären Auslaufarmatur montierbar ist und eine Drossel- oder Regeleinrichtung mit einem Drossel- oder Regelelement hat, das von einer Ausgangsstellung unter dem Druck des zuströmenden Wassers gegen eine Rückstellkraft in eine Drossel- oder Regelstellung verschieblich geführt ist, wobei der Drossel- oder Regeleinrichtung ein Strahlzerleger abströmseitig nachgeschaltet ist, der das durchströmende Wasser in eine Vielzahl von Einzelstrahlen aufteilt, wobei am Strahlzerleger zuströmseitig ein Führungszapfen vorsteht, an welchem Führungszapfen das Drossel- oder Regelelement verschieblich geführt ist, wobei das Drossel- oder Regelelement eine Führungsöffnung hat, wobei zur Relativverschiebung von Drossel- oder Regelelement und Führungszapfen die Führungsöffnung auf dem Führungszapfen geführt ist, wobei der Schiebeweg des Drossel- oder Regelelements zwischen dem Strahlzerleger und einem Schiebeanschlag begrenzt ist, der an dem dem Strahlzerleger abgewandten Zapfenendbereich des Führungszapfens angeordnet ist, und wobei der Drossel- oder Regeleinrichtung ein Vorsatz- oder Filtersieb vorgeschaltet ist.

Man kennt bereits sanitäre Einsetzeinheiten, die in ein Auslaufmundstück einsetzbar sind, um mit diesem Auslaufmundstück am Wasserauslauf einer sanitären Auslaufarmatur montiert zu werden. Die vorbekannten Einsetzeinheiten weisen einen Durchflussmengenregler auf, dem zuströmseitig ein Vorsatz- oder Filtersieb vorgeschaltet und abströmseitig ein Strahlregler nachgeordnet sind. Während der Durchflussmengenregler das durchströmende Wasser druckunabhängig auf eine festgelegte maximale Durchflussleistung einzuregeln hat, ist der Strahlregler der vorbekannten Einsetzeinheit dazu bestimmt, das ausströmende Wasser zu einem homogenen, nicht-spritzenden und gegebenenfalls auch perlend-weichen Wasserstrahl zu formen. Mit Hilfe des zuströmseitig vorgeschalteten Vorsatz- oder Filtersiebes werden die im Wasser mitgeführten Kalk- und Schmutzpartikel ausgefiltert, die ansonsten die ordnungsgemäße Funktion des Durchflussmengenreglers und/oder des Strahlreglers beeinträchtigen könnten.

Die in den vorbekannten Einsetzeinheiten verwendeten Durchflussmengenregler weisen meist einen ringförmigen Drosselkörper aus elastisch verformbaren Material auf, der zwischen sich und einem zentralen Drossel- oder Regelkern einen sich unter dem Druck des durchströmenden Wassers veränderbaren Steuerspalt umgrenzt. Der Regelkern weist dazu umfangsseitig eine Regelprofilierung auf, in welche der elastisch verformbare Drosselkörper mit zunehmendem Druck des durchströmenden Wassers sich zunehmend derart einformt, dass auch bei hohen Wasserdrücken ein festgelegter Maximalwert der Durchflussleistung nicht überschritten wird. Bei geringen Wasserdrücken, die noch nicht eine Verformung des elastischen Drosselkörpers bewirken, stellen diese vorbekannten Durchflussmengenregler aber ein Strömungshindernis dar, das die durchfließende Wassermenge noch zusätzlich einschränkt.

Man hat daher auch sanitäre Einsetzeinheiten der eingangs erwähnten Art geschaffen, bei denen der umfangsseitig profilierte Kern von einer Ausgangsstellung unter dem Druck des durchströmenden Wassers gegen eine Rückstellkraft in eine Regelstellung verschieblich geführt ist. Während in der Regelstellung der elastisch verformbare Drosselkörper und der profilierte Regelkern funktionsgerecht zueinander angeordnet sind, befindet sich der profilierte Regelkern in der unbelasteten Ausgangsstellung in einem Siebinnenraum, den das hut- oder tellerförmige Vorsatzsieb umgrenzt. Da als Rückstellkraft eine Druckfeder vorgesehen ist, die auch in der Ausgangsstellung auf den Drossel- oder Regelkern einwirkt und diesen Drossel- oder Regelkern in Richtung zum zuströmseitigen Vorsatzsieb drückt, besteht die Gefahr, dass das Vorsatz- oder Filtersieb von den übrigen Bestandteilen der vorbekannten Einsetzeinheit getrennt wird und diese Einsetzeinheit auseinanderfällt.

Aus den Fig. 5 bis 8 der EP 2 100 201 B1 und der Fig. 3 in EP 1 933 217 A1 sind bereits sanitäre Einsetzeinheiten der eingangs erwähnten Art vorbeschrieben, die am Wasserauslauf einer sanitären Auslaufarmatur montierbar sind. Die vorbekannten Einsetzeinheiten weisen eine als Durchflussmengenregler ausgebildete Regeleinrichtung mit einem Regelelement auf, das von einer Ausgangsstellung unter dem Druck des durchströmenden Wassers gegen eine Rückstellkraft in eine Drossel- oder Regelstellung verschieblich geführt ist. Das Regelelement der vorbekannten Einsetzeinheiten ist ringscheibenförmig ausgebildet und weist eine zentrale Führungsöffnung auf, wobei zur Relativverschiebung von Drossel- oder Regelelement und Führungszapfen die Führungsöffnung auf dem Führungszapfen geführt ist. Während auf der Zuströmseite der Regeleinrichtung ein Vorsatz- oder Filtersieb vorgesehen ist, dass die im anströmenden Wasser enthaltenen Kalk- oder Schmutzpartikel auszufiltern hat, bevor diese die Funktion der vorbekannten Einsetzeinheiten beeinträchtigen können, ist auf der Abströmseite der Regeleinrichtung demgegenüber ein Strahlzerleger nachgeschaltet, der das durchströmende Wasser in eine Vielzahl von Einzelstrahlen aufteilt. Am Strahlzerleger der vorbekannten Einsetzeinheiten steht zuströmseitig ein Führungszapfen vor, an welchem Führungszapfen das Drossel- oder Regelelement verschieblich geführt ist. Dabei wird der Schiebeweg des Drossel- oder Regelelements zwischen dem Strahlzerleger und einem Schiebeanschlag begrenzt, der an dem dem Strahlzerleger abgewandten Zapfenendbereich des Führungszapfens angeordnet ist. Als Schiebeanschlag dient dabei die einen Siebinnenraum begrenzende Siebinnenfläche des Vorsatz- oder Filtersiebes, an welcher Siebinnenfläche das Drossel- oder Regelelement auch in der Ausgangsstellung anliegt. Da die Rückstellkraft auch in der Ausgangsstellung auf das Drossel- oder Regelelement einwirkt und da die Rückstellkraft das Drossel- oder Regelelement in dieser Ausgangsstellung gegen das zuströmseitige Vorsatz- oder Filtersieb drückt, besteht die Gefahr, dass die Rückstellkraft das Vorsatz- oder Filtersieb abhebt und die vorbekannten Einsetzeinheiten auseinanderfallen können.

Es besteht daher die Aufgabe, eine Einsetzeinheit der eingangs erwähnten Art zu schaffen, die sich durch ihre hohe Funktionssicherheit auszeichnet.

Die erfindungsgemäße Lösung dieser Aufgabe besteht bei der sanitären Einsetzeinheit der eingangs erwähnten Art darin, dass der Schiebeanschlag als Querschnittserweiterung des Führungszapfens ausgebildet ist, dass das die Querschnittserweiterung tragende Zapfenende des Führungszapfens in wenigstens zwei Zapfensegmente gespalten oder aufgeteilt ist, dass die wenigstens zwei Zapfensegmente von einer Ausgangsstellung aus in eine einander angenäherte Schiebestellung einlenkbar sind, dass die Zapfensegmente um eine im Führungszapfen ausgebildete Einstecköffnung herum angeordnet sind, und dass das Vorsatz- oder Filtersieb einen Sicherungszapfen trägt, der in die Einstecköffnung einsetzbar ist und ein Einlenken der Zapfensegmente zueinander verhindert.

Die erfindungsgemäße Einsetzeinheit, die am Wasserauslauf einer sanitären Auslaufarmatur montierbar ist, weist eine Drossel- oder Regeleinrichtung auf, die den durchfließenden Wasseratrom entweder zu drosseln oder auf eine festgelegte maximale Durchflussleistung einzuregeln hat. Um diese Drossel- oder Regeleinrichtung erst bei erhöhten Wasserdrücken zuzuschalten, weist die Drossel- oder Regeleinheit ein Drossel- oder Regelelement auf, welches von einer Ausgangsstellung unter dem Druck des zuströmenden Wassers gegen eine Rückstellkraft in eine Drossel- oder Regelstellung verschieblich geführt ist. Der Drossel- oder Regeleinrichtung der erfindungsgemäßen Einsetzeinheit ist ein Strahlzerleger abströmseitig nachgeschaltet, der das durchströmende Wasser in eine Vielzahl von Einzelstrahlen aufzuteilen hat. An dem Strahlzerleger steht zuströmseitig ein Führungszapfen vor, an welchem Führungszapfen das Drossel- oder Regelelement verschieblich geführt ist. Um das Drossel- oder Regelelement sicher zwischen der Ausgangsstellung und der Drossel- oder Regelstellung verschieblich führen zu können, ist vorgesehen, dass das Drossel- oder Regelelement eine vorzugsweise zentrale Führungsöffnung hat, und dass zur Relativverschiebung von Drossel- oder Regelelement und Führungszapfen die Führungsöffnung auf dem Führungszapfen geführt ist. Dabei ist der Schiebeweg des Drossel- oder Regelelementes zwischen dem Strahlzerleger und einem Schiebeanschlag begrenzt, welcher Schiebeanschlag an dem dem Strahlzerleger abgewandten Zapfenendbereich des Führungszapfens angeordnet ist. Dieser Schiebeanschlag ist als Querschnittserweiterung des Führungszapfens ausgebildet. Während der dem Drossel- oder Regelelement als Schiebeführung dienende Teilbereich des Führungszapfens einen kleineren Querschnitt aufweist, ist der an dem einen Zapfenende des Führungszapfens vorgesehene Schiebeanschlag demgegenüber als Querschnittsverdickung oder Querschnittserweiterung ausgebildet. Dabei ist das die Querschnittserweiterung tragende Zapfenende des Führungszapfens in wenigstens zwei Zapfensegmente gespalten oder aufgeteilt, wobei die wenigstens zwei Zapfensegmente von einer Ausgangsstellung aus in eine einander angenäherte Schiebestellung einlenkbar sind. Durch Aufschieben oder Aufdrücken des Drossel- oder Regelelements auf den die Querschnittserweiterung tragenden Zapfenendbereich des Führungszapfens wird die in Zapfen-Längsrichtung orientierte Aufdrückbewegung in eine radiale Einlenkbewegung der wenigstens zwei Zapfensegmente in Richtung zueinander umgesetzt. Durch diese Einlenkbewegung der Zapfensegmente verringert sich während des Aufschiebens des Drossel- oder Regelelements der Querschnitt des Führungszapfens im Bereich seiner Querschnittserweiterung. Auf diese Weise kann die Querschnittserweiterung beim Aufschieben des Drossel- oder Regelelements überwunden werden, ohne dass anschließend der sichere Halt des Drossel- oder Regelelements auf dem Führungszapfen beeinträchtigt wird. Die Zapfensegmente sind um eine im Führungszapfen ausgebildete Einstecköffnung herum angeordnet, wobei in die Einstecköffnung ein Sicherungszapfen einsetzbar ist, der ein Einlenken der Zapfensegmente zueinander verhindert. Dabei trägt das Vorsatz- oder Filtersieb den Sicherungszapfen. Durch Anbringen des Vorsatz- oder Filtersiebes an der erfindungsgemäßen Einsetzeinheit wird somit auch der Sicherungszapfen in die am Führungszapfen vorgesehene Einstecköffnung eingeschoben, wodurch ein unbeabsichtigtes Einlenken der am Zapfenendbereich vorgesehenen Zapfensegmente wirkungsvoll verhindert wird. Da ein unbeabsichtigtes Einlenken der Zapfensegmente in Richtung zueinander verhindert wird, wird das Drossel- oder Regelelement am Führungszapfen selbst dann sicher und fest gehalten, wenn auf das Drossel- oder Regelelement eine starke Rückstellkraft einwirkt. Da die auf das Drossel- oder Regelelement auch in der Ausgangsstellung einwirkende Rückstellkraft über den Schiebeanschlag abgetragen werden kann und da die Rückstellkraft das Drossel- oder Regelelement nicht innenseitig gegen das Vorsatz- oder Filtersieb drückt, wird die Gefahr vermieden, dass die Rückstellkraft das Vorsatz- oder Filtersieb von der erfindungsgemäßen Einsetzeinheit abhebt und die erfindungsgemäße Einsetzeinheit auseinanderfallen kann.

Um das Drossel- oder Regelelement über die Querschnittserweiterung hinweg auf den Führungszapfen aufschieben zu können, ist es vorteilhaft, wenn an der Querschnittserweiterung des Führungszapfens und/oder an dem dem Führungszapfen zugewandten und die Führungsöffnung des Drossel- oder Regelelements umgrenzenden Umfangsrandbereich des Drossel- oder Regelelements eine umlaufende Aufschiebeschräge vorgesehen ist. Ist das Drossel- oder Regelelement und/oder der Führungszapfen entsprechend nachgiebig ausgestaltet, kann das Drossel- oder Regelelement an den Aufschiebeschrägen gut über die Querschnittserweiterung des Führungszapfens hinweg auf diesen aufgeschoben werden.

Dabei sieht die Erfindung vor, dass das die Querschnittserweiterung tragende Zapfenende des Führungszapfens in wenigstens zwei Zapfensegmente gespalten oder aufgeteilt ist, und dass die wenigstens zwei Zapfensegmente von einer Ausgangsstellung aus in eine einander angenäherte Schiebestellung einlenkbar sind. Durch Aufschieben oder Aufdrücken des Drossel- oder Regelelements auf den die Querschnittserweiterung tragenden Zapfenendbereich des Führungszapfens wird die in Zapfen-Längsrichtung orientierte Aufdrückbewegung in eine radiale Einlenkbewegung der wenigstens zwei Zapfensegmente in Richtung zueinander umgesetzt.

Vorteilhaft ist es, wenn die Einsetzeinheit ein Einsetzgehäuse hat und wenn das Vorsatz- oder Filtersieb am Einsetzgehäuse lösbar gehalten, vorzugsweise lösbar verrastbar, ist.

Eine bevorzugte Ausführungsform gemäß der Erfindung sieht vor, dass die Drossel- oder Regeleinrichtung als Durchflussmengenregler ausgebildet ist, der einen ringförmigen und elastisch verformbaren Drosselkörper hat, welcher das Drossel- oder Regelelement umgreift und der zwischen sich und zumindest einer benachbarten profilierten Umfangswandung einen Steuerspalt begrenzt, der unter dem Druck des durchströmenden Wassers veränderbar ist. Ein solcher Durchflussmengenregler kann die pro Zeiteinheit durchströmende Wassermenge auf ein festgelegtes maximales Volumen einregeln.

Besonders vorteilhaft ist es, wenn das Vorsatz- oder Filtersieb einen Siebinnenraum umgrenzt und wenn in diesem Siebinnenraum die Drossel- oder Regeleinrichtung oder zumindest ihr Drossel- oder Regelelement verschieblich geführt ist.

Eine bevorzugte Ausführungsform gemäß der Erfindung sieht vor, dass das Drossel- oder Regelelement in der Ausgangsstellung oberhalb dem Drosselkörper im Siebinnenraum des Vorsatz- oder Filtersiebes vorgesehen ist.

Die auf den Drossel- oder Regelkern einwirkende Rückstellkraft kann beispielsweise als gummielastisches Rückstellelement ausgebildet sein. Eine besonders einfache und leicht herstellbare Ausführungsform gemäß der Erfindung sieht jedoch vor, dass die Rückstellkraft als Rückstellfeder ausgebildet ist oder durch eine Rückstellfeder aufgebracht wird, und dass die Rückstellfeder vorzugsweise als Druck-Wendelfeder ausgestaltet ist.

Besonders vorteilhaft ist es, wenn das vom elastischen Drosselkörper umgriffene Drossel- oder Regelelement die profilierte Umfangswandung aufweist und dazu an dieser Umfangswandung eine Regelprofilierung trägt.

Weiterbildungen gemäß der Erfindung ergeben sich aus den Ansprüchen und der Beschreibung in Verbindung mit den Zeichnungen. Nachstehend wird die Erfindung anhand eines bevorzugten Ausführungsbeispieles noch näher beschrieben.

Es zeigt:
- Fig. 1: eine sanitäre Einsetzeinheit in einer perspektivischen Seitenansicht, die aus einem zuströmseitigen Vorsatz- oder Filtersieb, einem abströmseitigen belüfteten Strahlregler sowie einer dazwischen angeordneten Drossel- oder Regeleinrichtung besteht,
- Fig. 2: die sanitäre Einsetzeinheit aus Figur 1 in einer auseinander gezogenen perspektivischen Darstellung ihrer Einzelteile,
- Fig. 3: die bereits in den Figuren 1 und 2 gezeigte und hier ebenfalls in einem Längsschnitt dargestellte Einsetzeinheit, deren Drossel- oder Regeleinrichtung ein Drossel- oder Regelelement hat, das an einem Führungszapfen zwischen der hier gezeigten Ausgangsstellung und einer Drossel- oder Regelstellung verschieblich geführt ist,
- Fig. 4: die sanitäre Einsetzeinheit aus den Figuren 1 bis 3 in einer hier ebenfalls längsgeschnittenen Detaildarstellung im Bereich eines an das Vorsatz- oder Filtersieb angeformten Sicherungszapfens, welcher Sicherungszapfen in eine stirnseitig offene Einstecköffnung im Führungszapfen vorsteht,
- Fig. 5: die hier ebenfalls in einem Längsschnitt gezeigte Einsetzeinheit in der Drossel- oder Regelstellung des Drossel- oder Regelelements ihrer Drossel- oder Regeleinrichtung,
- Fig. 6: eine in einem Längsschnitt dargestellte sanitäre Einsetzeinheit, die hier ebenfalls aus einem zuströmseitigen Vorsatz- oder Filtersieb, einem abströmseitigen belüfteten Strahlregler sowie einer dazwischen angeordneten Drossel- oder Regeleiririchtung besteht, wobei bei der hier dargestellten Einsetzeinheit die komplette Drossel- oder Regeleinrichtung verschieblich geführt ist und sich hier in einer Ausgangsstellung befindet,
- Fig. 7: die Einsetzeinheit aus Figur 6 in der Drossel- oder Regelstellung ihrer Drossel- oder Regeleinrichtung und
- Fig. 8: die bereits in den Figuren 6 und 7 gezeigte Einsetzeinheit in einer auseinandergezogenen perspektivischen Einzelteildarstellung.

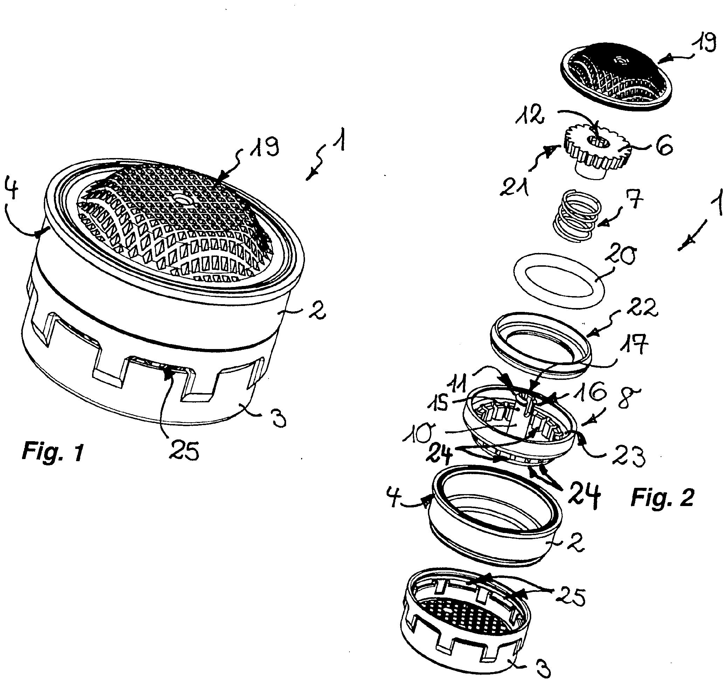

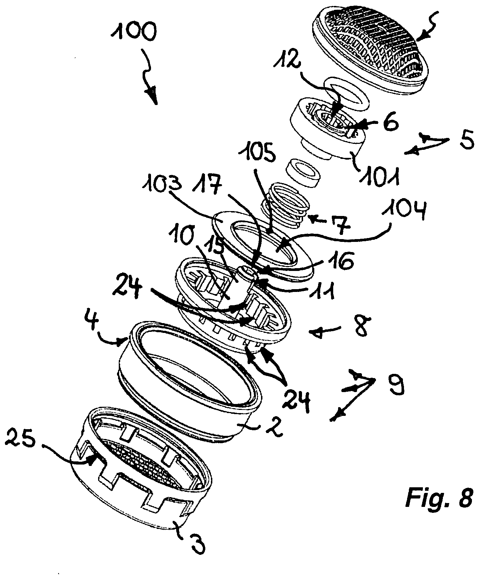

In den Figuren 1 bis 8 ist eine sanitäre Einsetzeinheit in zwei Ausführungen 1, 100 dargestellt, die ein Einsetzgehäuse hat. Das hier aus einem zuströmseitigen und einem damit lösbar verbundenen abströmseitigen Gehäuseteil 2, 3 bestehende Einsetzgehäuse kann an seinem Gehäuseaußenumfang ein Außengewinde tragen, mit welchem die Einsetzeinheit 1, 100 in ein Innengewinde am Wasserauslauf einer hier ebenfalls nicht gezeigten sanitären Auslaufarmatur einschraubbar ist.

Die hier dargestellten Einsetzeinheiten 1, 100 weisen stattdessen an ihrem stirnseitigen Gehäuseumfangsrandbereich ihres zuströmseitigen Gehäuseteiles 2 einen als Einsetzanschlag dienenden Ringflansch 4 auf, bis zu dem die Einsetzeinheiten 1,100 in ein hülsenförmiges, hier nicht weiter dargestelltes Auslaufmundstück einsetzbar sind. Mit Hilfe dieses Auslaufmundstückes sind die hier dargestellten sanitären Einsetzeinheiten 1, 100 am Wasserauslauf einer sanitären Auslaufarmatur montierbar.

Die sanitären Einsetzeinheiten 1, 100 weisen eine Drossel- oder Regeleinrichtung 5 auf, die den durchfließenden Wasserstrom entweder zu drosseln oder auf eine festgelegte maximale Durchflussleistung einzuregeln hat. Diese Drossel- oder Regeleinrichtung 5 ist hier als Durchflussmengenregler ausgebildet, der das pro Zeiteinheit durchströmende Wasservolumen druckunabhängig auf einen festgelegten Maximalwert einzuregeln hat. Die Drossel- oder Regeleinrichtung 5 hat dazu ein Drossel- oder Regelelement 6, das von einem ringförmigen Drosselkörper 20 aus elastischem Material umgriffen wird. Bei funktionsbereiter Drossel- oder Regeleinrichtung 1, 100 umgrenzt der Drosselkörper 20 zwischen sich und einer am Drossel- oder Regelelement 6 umfangsseitig vorgesehenen Regelprofilierung 21 einen Steuerspalt. Mit steigendem Druck des durchströmenden Wassers wird der aus elastischem Material hergestellte Drosselkörper 20 zunehmend derart in die Regelprofilierung 21 gepresst, dass sich der Steuerspalt verengt. Da sich der elastisch verformbare Drosselkörper 20 bei zunehmendem Druck des durchströmenden Wassers immer mehr in die Regelprofilierung 21 des Drossel- oder Regelelements 6 einformt, ist der Steuerspalt unter dem Druck des durchströmenden Wassers derart veränderbar, dass die Drossel- oder Regeleinrichtung 5 druckunabhängig eine festgelegte maximale Durchflussleistung einzuregeln vermag.

Der Drossel- oder Regeleinrichtung 5 ist in den Einsetzeinheiten 1, 100 der Strahlzerleger 8 eines belüfteten Strahlreglers 9 abströmseitig nachgeschaltet. Der Strahlzerleger 8 hat das durchströmende Wasser in eine Vielzahl von Einzelstrahlen aufzuteilen. Der Strahlzerleger 8 ist hier topfförmig ausgebildet. Dabei sind an der Umfangswandung dieser Topfform in Umfangsrichtung vorzugsweise gleichmäßig voneinander beabstandete Durchflussöffnungen 24 vorgesehen, in denen sich die Einzelstrahlen bilden. Der plattenförmige Boden dieser Topfform, an dem ein zentraler Führungszapfen 10 entgegen der Durchströmrichtung vorsteht, dient als Prallfläche, an der das von der Drossel- oder Regeleinrichtung 5 kommende Wasser in Richtung zu den Durchflussöffnungen 24 umgelenkt wird. Da die Durchflussöffnungen 24 und die nachfolgende Strömungsführung im Bereich des zuströmseitigen Gehäuseteiles 2 eine Querschnittsverengung darstellt, werden die Einzelstrahlen im Bereich der Durchflussöffnungen 24 derart beschleunigt, dass sich auf der Abströmseite des Strahlzerlegers 8 und insbesondere im Inneren des abströmseitigen Gehäuseteiles 3 ein Unterdruck bildet. In Folge dieses Unterdruckes wird durch am Gehäuseumfang des abströmseitigen Gehäuseteiles 3 angeordnete Belüftungsöffnungen 25 Umgebungsluft in das untere Gehäuseteil 3 angesaugt, die dort mit dem durchströmenden Wasser durchmischt wird, bevor das derart mit Umgebungsluft angereicherte Wasser in einer die abströmseitige Stirnseite des unteren Gehäuseteiles 3 bildenden und als Lochstruktur ausgestalteten Homogenisiereinrichtung zu einem homogenen, nicht-spritzenden und perlend-weichen Wasserstrahl geformt wird.

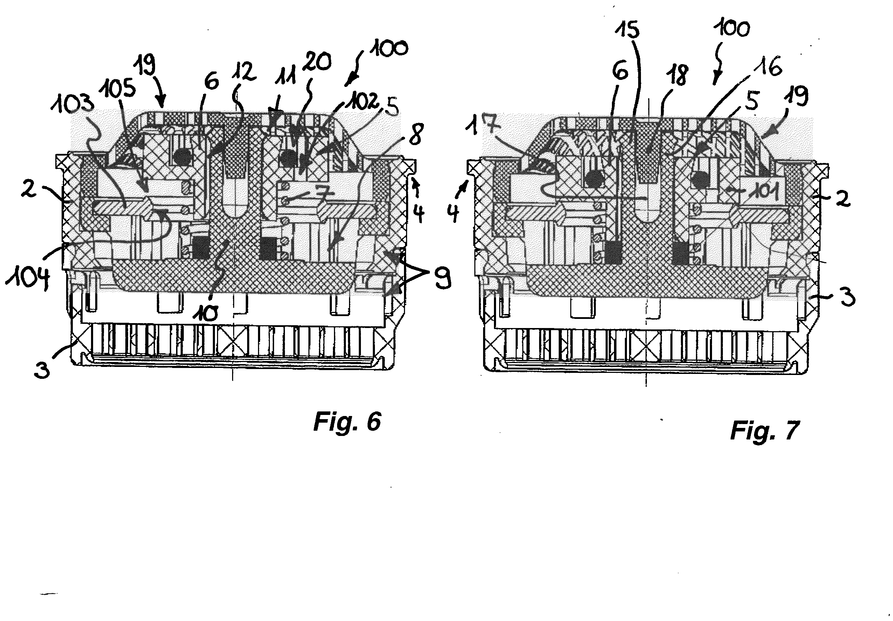

Aus einem Vergleich der Figuren 1 bis 5 einerseits und der Figuren 6 bis 8 andererseits wird deutlich, dass an dem über den Strahlzerleger 8 zuströmseitig vorstehenden Führungszapfen 10 die Drossel- oder Regeleinrichtung 5 oder zumindest ihr Drossel- oder Regelelement 6 verschieblich geführt sind. Dabei ist der Schiebeweg der Drossel- oder Regeleinrichtung 5 oder ihres Drossel- oder Regelelements 6 zwischen dem Strahlzerleger 8 und einem Schiebeanschlag 11 begrenzt, der an dem dem Strahlzerleger 8 abgewandten Zapfenendbereich des Führungszapfens 10 angeordnet ist. Um entweder die komplette und funktionsbereite Drossel- oder Regeleinrichtung 5 (vgl. Figuren 6 bis 8) oder auch nur ihr Drossel- oder Regelelement 6 (vgl. Figuren 1 bis 5) am Führungszapfen 10 verschieblich führen zu können, weist das Drossel- oder Regelelement 6 der Einsetzeinheiten 1, 100 eine hier zentral angeordnete Führungsöffnung 12 auf, in welcher Führungsöffnung 12 der Führungszapfen 10 verschieblich geführt ist. Der Schiebeanschlag 11 ist als Querschnittsverdickung oder Querschnittserweiterung des Führungszapfens 10 ausgebildet. Bei den hier dargestellten Einsetzeinheiten 1, 100 ist sowohl an der als Schiebeanschlag 11 dienenden Querschnittserweiterung des Führungszapfens 10 als auch an dem dem Führungszapfen 10 zugewandten Umfangsrandbereich des Drossel- oder Regelelements 6 jeweils eine umlaufende Aufschiebeschräge 13, 14 vorgesehen. Das die Querschnittserweiterung tragende Zapfenende des Führungszapfens 10 ist in wenigstens zwei Zapfensegmente 15, 16 aufgeteilt, welche Zapfensegmente 15, 16 von einer Ausgangstellung aus in eine einander angenäherte Schiebestellung einlenkbar sind. Mittels der Aufschiebeschrägen 13, 14 wird beim Aufschieben oder Aufdrücken des Drossel- oder Regelelements 6 auf den Führungszapfen 10 die ausgeübte und in Zapfen-Längsrichtung orientierte Schiebebewegung in eine radiale Einlenkbewegung der Zapfensegmente 15, 16 in Richtung zueinander umgesetzt.

Aus einem Vergleich der Figuren 2 bis 4 beziehungsweise 6 und 7 wird deutlich, dass die Zapfensegmente 15, 16 um eine im Führungszapfen 10 ausgebildete Einstecköffnung 17 herum angeordnet sind. In diese Einstecköffnung 17 ist ein Sicherungszapfen 18 einsetzbar, der ein Einlenken der Zapfensegmente 15, 16 zueinander verhindert. Die Einsetzeinheiten 1, 100 weisen ein zuströmseitiges Vorsatz- oder Filtersieb 19 auf, das die im zuströmenden Wasser mitgeführten Kalk- oder Schmutzpartikel ausfiltert, die andernfalls die ordnungsgemäße Funktion der Drossel- oder Regeleinrichtung 5 oder des Strahlregler 9 in der Einsetzeinheit 1, 100 beeinträchtigen könnten. Das Vorsatz- oder Filtersieb 19 ist an seinem Siebaußenumfang am Einsetzgehäuse der Einsetzeinheit 1 beziehungsweise 100 lösbar gehalten, vorzugsweise lösbar verrastbar. Durch Anbringen des Vorsatz- oder Filtersiebes 19 an der Einsetzeinheit 1, 100 wird auch der innenseitig am Vorsatz- oder Filtersieb 19 einstückig angeformte Sicherungszapfen 18 in die Einstecköffnung 17 des Führungszapfens 10 eingeschoben und ein unbeabsichtigtes Auseinanderfallen der Einsetzeinheit 1, 100 verhindert.

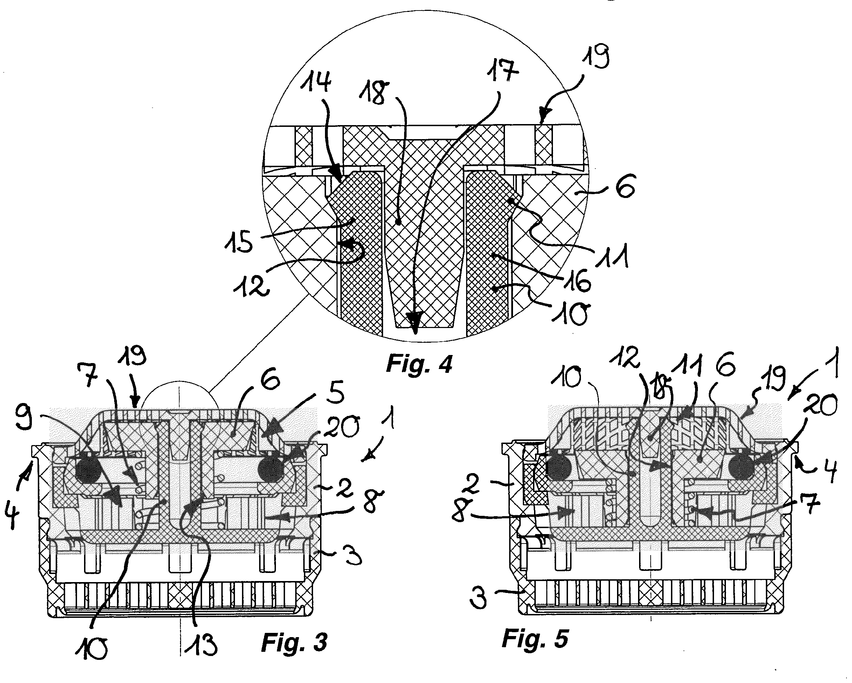

Die als Durchflussmengenregler ausgebildete Drossel- oder Regeleinrichtung 5 der in den Figuren 1 bis 5 dargestellten Einsetzeinheit 1 weist ein Drossel- oder Regelelement 6 auf, das von der in Figur 3 gezeigten Ausgangsstellung unter dem Druck des zuströmenden Wassers gegen die Rückstellkraft einer Rückstellfeder 7 in die in Figur 5 dargestellte Drossel- oder Regelstellung verschieblich geführt ist. Der ringförmige Drosselkörper 20 liegt auf einem Auflagering 22 auf, der in den Strahlzerleger 8 bis zu einem innenumfangsseitigen Ringabsatz 23 eingesetzt ist. In der Drossel- oder Regelstellung gemäß Figur 5 ist der auf dem Auflagering 22 befindliche Drosselkörper 20 in der Höhe der am Drossel- oder Regelelement 6 vorgesehenen Regelprofilierung 21 positioniert und kann sich unter dem Druck des durchströmenden Wassers druckabhängig in die Regelprofilierung 21 einformen. Während in der in Figur 3 gezeigten Ausgangsstellung der Einsetzeinheit 1 zwischen dem Drossel- oder Regelelement 6 und dem elastischen Drosselkörper 20 noch ein vergleichsweise breiter Ringspalt frei bleibt, durch welchen Ringspalt auch bei geringen Wasserdrücken und -mengen das Wasser praktisch ungehindert durchfließen kann, kann in der in Figur 5 gezeigten Drossel- oder Regelstellung das Wasser nur noch durch den Steuerspalt der nunmehr funktionsbereiten Drossel- oder Regeleinrichtung 5 passieren, wenn ein erhöhter Wasserdruck das Drossel- oder Regelelement gegen die Rückstellkraft des Rückstellelements 7 in die Ringöffnung des Drosselkörpers 20 gedrückt hat. In dieser Drossel- oder Riegelstellung gemäß Figur 5 regelt die Drossel- oder Regeleinrichtung 6 die pro Zeiteinheit durchströmende Wassermenge auf einen festgelegten Maximalwert ein.

Bei der in den Figuren 6 bis 8 gezeigten Einsetzeinheit 100 wird demgegenüber die komplette und funktionsbereite Drossel- oder Regeleinrichtung zwischen der in Figur 6 gezeigten Ausgangsstellung und der in Figur 7 abgebildeten Drossel- oder Riegelstellung bewegt. Die Drossel- oder Regeleinrichtung 5 der Einsetzeinheit 100 hat dazu ein Reglergehäuse 101, das am Führungszapfen 10 verschieblich geführt ist. Dieses Reglergehäuse 101 weist eine Ringnut auf, in die der elastische Drosselkörper 20 eingelegt ist. Durch die Ringnut wird im Reglergehäuse 101 das zentrale Drossel- oder Regelelement 6 ausgebildet, welches vom Drosselkörper 20 umgriffen wird. An zumindest einer der Umfangsseiten der Ringnut ist die Regelprofilterung 21 vorgesehen, in die sich der elastische Drosselkörper 20 mit zunehmendem Wasserdruck einformen kann. In Strömungsrichtung hinter dem Drosselkörper 20, im Bereich der Regelprofilierung 21, ist am Nutgrund zumindest eine Durchströmrichtung 102 vorgesehen, durch die von der: Drossel- oder Regeleinrichtung 5 eingeregelte Wassermenge passieren muss. Aus einem Vergleich der Figuren 6 und 7 wird deutlich, dass das hier als Druck-Wendelfeder ausgebildete Rückstellelement 7 die Drossel- oder Regeleinrichtung 5 der Einsetzeinheit, 100 in Richtung zum Vorsatz- oder Filtersieb 19 drückt und in der Ausgangsstellung hält. In dieser Ausgangsstellung ist das Reglergehäuse 101 mit Abstand oberhalb eines Auflagers 103 angeordnet. Dieses Auflager 103 ist hier als Ringscheibe ausgebildet, die eine zentrale Auflageröffnung 104 hat. In der in Figur 6 gezeigten Ausgangsstellung kann das die Einsetzeinheit 100 durchströmende Wasser auch bei geringen Wasserdrücken noch am Reglergehäuse 101 der Drossel- oder Regeleinrichtung 5 vorbei durch die groß dimensionierte Auflageröffnung 104 in Richtung zum Strahlzerleger strömen. Demgegenüber liegt das Reglergehäuse 101 in der in Figur 7 gezeigten Drossel- oder Regelstellung dicht auf dem Auflager 103 auf, so dass die Auflageröffnung 104 verschlossen ist und das durchströmende Wasser allein durch die funktionsbereite Drossel- oder Regeleinrichtung 5 passieren muss. Damit das Reglergehäuse 101 in der in Figur 7 gezeigten Drossel- oder Regelstellung dicht auf dem Auflager 103 aufliegen kann, ist an dem die Auflageröffnung 104 umgrenzenden Randbereich des Auflagers 103 eine hier als Lippendichtung ausgebildete Ringdichtung 105 vorgesehen. In der in Figur 7 gezeigten Drossel- oder Regelstellung mündet die zumindest eine Durchströmrichtung 102 der Drossel- oder Regeleinrichtung 5 in der Auflageröffnung 104 der Einsetzeinheit 100.

In den Figuren 5 und 6 ist erkennbar, dass das Vorsatz- oder Filtersieb 19 einen Siebinnenraum umgrenzt, wobei die Drossel- oder Regeleinrichtung 5 oder zumindest das Drossel- oder Regelelement 6 in diesen Siebinnenraum des Vorsatz- oder Filtersiebes 19 verschieblich geführt ist. Um die Reibung zwischen der im Reglergehäuse 101 vorgesehenen Führungsöffnung 12 einerseits und dem Führungszapfen 10 andererseits möglichst gering zu halten, sind an dem die Führungsöffnung 12 umgrenzenden Innenumfang des hier hülsenförmig ausgebildeten Drossel- oder Regelelements 6 in Längserstreckung der Drossel- oder Regeleinrichtung 5 orientierte Führungsrippen vorgesehen, die eine nur linienförmige Berührungsfläche zwischen dem Innenumfang des Drossel- oder Regelelements 5 und des Führungszapfens 10 bilden.

### Bezugszeichenliste

- 1: Einsetzeinheit (gemäß den Figuren 1 bis 5)
- 2: zuströmseitiges Gehäuseteil
- 3: abströmseitiges Gehäuseteil
- 4: Ringflansch
- 5: Drossel- oder Regeleinrichtung
- 6: Drossel- oder Regelelement
- 7: Rückstellfeder
- 8: Strahlzerleger
- 9: Strahlregler
- 10: Führungszapfen
- 11: Schiebeanschlag
- 12: Führungsöffnung
- 13: Aufschiebeschräge (am Führungszapfen 10)
- 14: Aufschiebeschräge (am Drossel- oder Regelkern 6)
- 15: Zapfensegment
- 16: Zapfensegment
- 17: Einstecköffnung
- 18: Sicherungszapfen
- 19: Vorsatz- oder Filtersieb
- 20: Drosselkörper
- 21: Regelprofilierung
- 22: Auflagering
- 23: Ringabsatz
- 24: Durchflussöffnungen
- 25: Belüftungsöffnungen
- 100: Einsetzeinheit (gemäß den Figuren 6 bis 8)
- 101: Reglergehäuse
- 102: Durchströmöffnung
- 103: Auflager
- 104: Auflageröffnung
- 105: Ringdichtung

## Patentansprüche

1. Sanitäre Einsetzeinheit (1, 100), die am Wasserauslauf einer sanitären Auslaufarmatur montierbar ist und eine Drossel- oder Regeleinrichtung (5) mit einem Drossel- oder Regelelement (6) hat, das von einer Ausgangsstellung unter dem Druck des zuströmenden Wassers gegen eine Rückstellkraft in eine Drossel- oder Regelstellung verschieblich geführt ist, wobei der Drossel- oder Regeleinrichtung (5) ein Strahlzerleger (8) abströmseitig nachgeschaltet ist, der das durchströmende Wasser in eine Vielzahl von Einzelstrahlen aufteilt, wobei am Strahlzerleger (8) zuströmseitig ein Führungszapfen (10) vorsteht, an welchem Führungszapfen (10) das Drossel- oder Regelelement (6) verschieblich geführt ist, wobei das Drossel- oder Regelelement (6) eine Führungsöffnung (12) hat, wobei zur Relativverschiebung von Drossel- oder Regelelement (6) und Führungszapfen (10) die Führungsöffnung (12) auf dem Führungszapfen geführt ist, wobei der Schiebeweg des Drossel- oder Regelelements (6) zwischen dem Strahlzerleger (8) und einem Schiebeanschlag (11) begrenzt ist, der an dem dem Strahlzerleger (8) abgewandten Zapfenendbereich des Führungszapfens (10) angeordnet ist, und wobei der Drossel- oder Regeleinrichtung (5) ein Vorsatz- oder Filtersieb (19) vorgeschaltet ist, **dadurch gekennzeichnet, dass** der Schiebeanschlag (11) als Querschnittserweiterung des Führungszapfens (10) ausgebildet ist, dass das die Querschnittserweiterung tragende Zapfenende des Führungszapfens (10) in wenigstens zwei Zapfensegmente (15, 16) gespalten oder aufgeteilt ist, dass die wenigstens zwei Zapfensegmente (15, 16) von einer Ausgangsstellung aus in eine einander angenäherte Schiebestellung einlenkbar sind, dass die Zapfensegmente (15, 16) um eine im Führungszapfen (10) ausgebildete Einstecköffnung (17) herum angeordnet sind und dass das Vorsatz- oder Filtersieb (19) einen Sicherungszapfen (18) trägt, der in die Einstecköffnung einsetzbar ist und ein Einlenken der Zapfensegmente (15, 16) zueinander verhindert.

2. Sanitäre Einsetzeinheit nach Anspruch 1, **dadurch gekennzeichnet, dass** an der Querschnittserweiterung des Führungszapfens (10) und/oder an dem dem Führungszapfen (10) zugewandten und die Führungsöffnung (12) umgrenzenden Umfangsrandbereich des Drossel- oder Regelelements (6) eine umlaufende Aufschiebeschräge (13, 14) vorgesehen ist.

3. Sanitäre Einsetzeinheit nach Anspruch 1 oder 2, **dadurch gekennzeichnet, dass** die Einsetzeinheit (1, 100) ein Einsetzgehäuse hat und dass das Vorsatz- oder Filtersieb (19) am Einsetzgehäuse lösbar gehalten, vorzugsweise lösbar verrastbar, ist.

4. Sanitäre Einsetzeinheit nach einem der Ansprüche 1 bis 3, **dadurch gekennzeichnet, dass** die Drossel- oder Regeleinrichtung (5) als Durchflussmengenregler ausgebildet ist, der einen ringförmigen und elastisch verformbaren Drosselkörper (20) hat, der das Drossel- oder Regelelement (6) umgreift und der zwischen sich und zumindest einer benachbarten profilierten Umfangswandung einen Steuerspalt umgrenzt, der unter dem Druck des durchströmenden Wassers veränderbar ist.

5. Sanitäre Einsetzeinheit nach einem der Ansprüche 1 bis 4, **dadurch gekennzeichnet, dass** das Vorsatz- oder Filtersieb (19) einen Siebinnenraum umgrenzt, in welchem die Drossel- oder Regeleinrichtung (5) oder zumindest ihr Drossel- oder Regelelement (6) verschieblich geführt ist.

6. Sanitäre Einsetzeinheit nach Anspruch 5, **dadurch gekennzeichnet, dass** das Drossel- oder Regelelement (6) in der Ausgangsstellung oberhalb dem Drosselkörper (20) im Siebinnenraum des Vorsatz- oder Filtersiebes (19) vorgesehen ist.

7. Sanitäre Einsetzeinheit nach einem der Ansprüche 1 bis 6, **dadurch gekennzeichnet, dass** die Rückstellkraft als Rückstellfeder ausgebildet ist oder durch eine Rückstellfeder aufgebracht wird, und dass die Rückstellfeder als Druck-Wendelfeder ausgestaltet ist.

8. Sanitäre Einsetzeinheit nach einem der Ansprüche 4 bis 7, **dadurch gekennzeichnet, dass** das vom elastischen Drosselkörper umgriffene Drossel- oder Regelelement (6) die profilierte Umfangswandung aufweist und dazu an dieser Umfangswandung eine Regelprofilierung (21) trägt.

9. Sanitäre Einsetzeinheit nach einem der Ansprüche 1 bis 8, **dadurch gekennzeichnet, dass** die Führungsöffnung (12) am Drossel- oder Regelelement (6) zentral angeordnet ist.

## Claims

1. Sanitary insert unit (1, 100) which can be fitted on the water outlet of a sanitary outlet fitting and has a flow-restricting or control device (5) having a flow-restricting or control element (6) which is displaceably guided, under the pressure of the inflowing water against a returning force, from a starting position into a flow-restricting or control position, wherein a jet splitter (8) is connected downstream of the flow-restricting or control device (5) on the outflow-side and divides the through-flowing water into a multiplicity of individual jets, wherein a guide pin (10) protrudes from the jet splitter (8) on the inflow-side, the flow-restricting or control element (6) being displaceably guided on said guide pin (10), wherein the flow-restricting or control element (6) has a guide opening (12), wherein the guide opening (12) is guided on the guide pin (10) for the relative displacement of the flow-restricting or control element (6) and the guide pin (10), wherein the sliding path of the flow-restricting or control element (6) is delimited between the jet splitter (8) and a sliding stop (11) which is arranged on the pin end region, remote from the jet splitter (8), of the guide pin (10), and wherein an attachment screen or filter screen (19) is connected upstream of the flow-restricting or control device (5), **characterised in that** the sliding stop (11) is formed as a cross-sectional widening of the guide pin (10), **in that** the pin end of the guide pin (10) bearing the cross-sectional widening is split or divided into at least two pin segments (15, 16), **in that** the at least two pin segments (15, 16) can be turned in from a starting position into a sliding position closer to each other, **in that** the pin segments (15, 16) are arranged around an insertion opening (17) formed in the guide pin (10), and **in that** the attachment screen or filter screen (19) bears a securing pin (18) which can be inserted into the insertion opening and prevents the pin segments (15, 16) from turning in towards each other.

2. Sanitary insert unit as claimed in claim 1, **characterised in that** a circumferential sliding slope (13, 14) is provided on the cross-sectional widening of the guide pin (10) and/or on the circumferential edge region of the flow-restricting or control element (6) facing the guide pin (10) and defining the guide opening (12).

3. Sanitary insert unit as claimed in claim 1 or 2, **characterised in that** the insert unit (1, 100) has an insert housing, and **in that** the attachment screen or filter screen (19) is releasably held, preferably releasably latched, on the insert housing.

4. Sanitary insert unit as claimed in any one of claims 1 to 3, **characterised in that** the flow-restricting or control device (5) is formed as a flow rate controller which has an annular and elastically deformable flow-restricting body (20) which encompasses the flow-restricting or control element (6) and defines a control gap between itself and at least one adjacent profiled circumferential wall, said control gap being variable under the pressure of the through-flowing water.

5. Sanitary insert unit as claimed in any one of claims 1 to 4, **characterised in that** the attachment screen or filter screen (19) defines a screen interior in which the flow-restricting or control device (5) or at least its flow-restricting or control element (6) is displaceably guided.

6. Sanitary insert unit as claimed in claim 5, **characterised in that** in the starting position the flow-restricting or control element (6) is provided above the flow-restricting body (20) in the screen interior of the attachment screen or filter screen (19).

7. Sanitary insert unit as claimed in any one of claims 1 to 6, **characterised in that** the returning force is embodied as a return spring or is applied by a return spring, and **in that** the return spring is configured as a helical compression spring.

8. Sanitary insert unit as claimed in any one of claims 4 to 7, **characterised in that** the flow-restricting or control element (6) encompassed by the elastic flow-restricting body comprises the profiled circumferential wall and in this respect has a control profiling (21) on this circumferential wall.

9. Sanitary insert unit as claimed in any one of claims 1 to 8, **characterised in that** the guide opening (12) is arranged centrally on the flow-restricting or control element (6).

## Revendications

1. °/ Unité d'insertion sanitaire (1, 100), qui peut être montée sur la sortie d'eau d'une robinetterie d'écoulement sanitaire et qui comporte un dispositif d'étranglement ou de régulation (5) avec un élément d'étranglement ou de régulation (6), qui est guidé de façon coulissante d'une position initiale sous la pression de l'eau qui arrive contre une force de rappel à une position d'étranglement ou de régulation, dans laquelle le dispositif d'étranglement ou de régulation (5) est suivi côté aval par un diviseur de jet (8), qui divise le courant d'eau en une multiplicité de jets individuels, dans laquelle un axe de guidage (10) est saillant côté amont sur le diviseur de jet (8), axe de guidage (10) sur lequel l'élément d'étranglement ou de régulation (6) est guidé de façon coulissante, dans laquelle l'élément d'étranglement ou de régulation (6) présente une ouverture de guidage (12), dans laquelle l'ouverture de guidage (12) est guidée sur l'axe de guidage (10) pour le déplacement relatif de l'élément d'étranglement ou de régulation (6) et de l'axe de guidage (10), dans laquelle la course de glissement de l'élément d'étranglement ou de régulation (6) est limitée entre le diviseur de jet (8) et une butée de glissement (11), qui est disposée sur la région d'extrémité d'axe de l'axe de guidage (10) située à l'opposé du diviseur de jet (8), et dans laquelle un tamis d'entrée ou de filtre (19) est disposé en amont du dispositif d'étranglement ou de régulation (5), **caractérisée en ce que** la butée de glissement (11) est formée par un élargissement de la section transversale de l'axe de guidage (10), **en ce que** l'extrémité d'axe de l'axe de guidage (10) portant l'élargissement de section transversale est fendue ou divisée en au moins deux segments d'axe (15, 16), **en ce que** lesdits au moins deux segments d'axe (15, 16) peuvent être déviés d'une position initiale à une position de glissement rapprochée l'un de l'autre, **en ce que** les segments d'axe (15, 16) sont disposés autour d'une ouverture d'engagement (17) formée dans l'axe de guidage (10) et **en ce que** le tamis d'entrée ou de filtre (19) porte un axe de fixation (18), qui peut être inséré dans l'ouverture d'engagement et qui empêche une déviation des segments d'axe (15, 16) l'un vers l'autre.

2. °/ Unité d'insertion sanitaire selon la revendication 1, **caractérisée en ce qu'**il est prévu un biseau d'entrée périphérique (13, 14) sur l'élargissement de section transversale de l'axe de guidage (10) et/ou sur la région du bord périphérique de l'élément d'étranglement ou de régulation (6) tournée vers l'axe de guidage (10) et entourant l'ouverture de guidage (12).

3. °/ Unité d'insertion sanitaire selon la revendication 1 ou 2, **caractérisée en ce que** l'unité d'insertion (1, 100) comprend un boîtier d'insertion et **en ce que** le tamis d'entrée ou de filtre (19) est maintenu de façon amovible, de préférence encliqueté de façon amovible, sur le boîtier d'insertion.

4. °/ Unité d'insertion sanitaire selon l'une quelconque des revendications 1 à 3, **caractérisée en ce que** le dispositif d'étranglement ou de régulation (5) est réalisé en forme de régulateur de débit, qui comprend un corps d'étranglement (20) annulaire et élastiquement déformable, qui encercle l'élément d'étranglement ou de régulation (6) et qui délimite entre lui-même et au moins une paroi périphérique profilée voisine une fente de commande, qui peut être modifiée sous la pression de l'eau en écoulement.

5. °/ Unité d'insertion sanitaire selon l'une quelconque des revendications 1 à 4, **caractérisée en ce que** le tamis d'entrée ou de filtre (19) encercle un espace intérieur de tamis, dans lequel le dispositif d'étranglement ou de régulation (5) ou au moins son élément d'étranglement ou de régulation (6) est guidé de façon coulissante.

6. °/ Unité d'insertion sanitaire selon la revendication 5, **caractérisée en ce que** l'élément d'étranglement ou de régulation (6) dans la position initiale est prévu au-dessus du corps d'étranglement (20) dans l'espace intérieur du tamis d'entrée ou de filtre (19).

7. °/ Unité d'insertion sanitaire selon l'une quelconque des revendications 1 à 6, **caractérisée en ce que** la force de rappel est formée par un ressort de rappel ou est appliquée par un ressort de rappel, et **en ce que** le ressort de rappel est formé par un ressort hélicoïdal de compression.

8. °/ Unité d'insertion sanitaire selon l'une quelconque des revendications 4 à 7, **caractérisée en ce que** l'élément d'étranglement ou de régulation (6) encerclé par le corps d'étranglement élastique présente la paroi périphérique profilée et porte à cet effet sur cette paroi périphérique un profilage de régulation (21).

9. °/ Unité d'insertion sanitaire selon l'une quelconque des revendications 1 à 8, **caractérisée en ce que** l'ouverture de guidage (12) est disposée au centre sur l'élément d'étranglement ou de régulation (6).
